Europäisches Patentamt

European Patent Office

Office européen des brevets

(11) Numéro de publication : **0 652 507 A1**

## (12) DEMANDE DE BREVET EUROPEEN

(21) Numéro de dépôt : **94410092.4**

(22) Date de dépôt : **25.10.94**

(51) Int. Cl.⁶ : **G06F 7/552**

(30) Priorité : **08.11.93 FR 9313589**

(43) Date de publication de la demande :
**10.05.95 Bulletin 95/19**

(84) Etats contractants désignés :
**DE FR GB IT**

(71) Demandeur : **SGS-THOMSON MICROELECTRONICS S.A.**
**7, Avenue Galliéni**
**F-94250 Gentilly (FR)**

(72) Inventeur : **Pirson, Alain**
**Rue du Haut de Seyssins**
**F-38180 Seyssins (FR)**
Inventeur : **Bard, Jean-Michel**
**259, Rue Victor Hugo**
**Hameau de l'Agnelin, F-38920 Crolles (FR)**
Inventeur : **Daoudi, Mohamed**
**10, Rue Jean-Jacques Rousseau**
**F-38320 Eybens (FR)**

(74) Mandataire : **de Beaumont, Michel**
**1bis, rue Champollion**
**F-38000 Grenoble (FR)**

(54) **Circuit élévateur au carré de nombres binaires.**

(57) La présente invention concerne un circuit élévateur au carré d'un nombre binaire $X$ de $n$ bits $x_0$ à $x_{n-1}$, comprenant des circuits de prétraitement (30) pour former l'ensemble des produits $x_i x_j$ des bits du nombre $X$, où $i$ et $j$ varient entre 0 et $n-1$ tel que $i \leqq j$. Les sorties des circuits de prétraitement fournissent des mots (L0, L1...) tels que chacun est formé par une succession aussi complète que possible de produits choisis parmi ceux qui restent dudit ensemble après la formation du mot précédent, chaque produit $x_i x_j$ de cette succession étant classé à un rang $i+j+1$ du mot si $i$ est différent de $j$ ou à un rang $2i$ si $i=j$. Des additionneurs sont connectés pour former la somme des mots en tant que carré du nombre $X$.

| | 8 | 7 | 6 | 5 | 4 | 3 | 2 | 1 | 0 |
|---|---|---|---|---|---|---|---|---|---|
| L1 | | | $x_2 x_3$ | $x_1 x_3$ | $x_0 x_3$ | $x_0 x_2$ | $x_0 x_1$ | 0 | $x_0$ |
| L2 | | | $x_3$ | 0 | $x_1 x_2$ | 0 | $x_1$ | | |
| L3 | | | | | $x_2$ | | | | |
| L4 | $(x_3 x_4)^*$ | $(x_2 x_4)^*$ | $(x_1 x_4)^*$ | $(x_0 x_4)^*$ | | | | | |
| L5 | $x_4$ | | | 1 | | | | | |

Fig 5A

| | 8 | 7 | 6 | 5 | 4 | 3 | 2 | 1 | 0 |
|---|---|---|---|---|---|---|---|---|---|
| L1 | $x_4$ | 0 | $x_2 x_3$ | $x_1 x_3$ | $x_0 x_3$ | $x_0 x_2$ | $x_0^{\bullet} x_1$ | 0 | $x_0$ |
| L2 | | | $x_3$ | $x_1 x_2$ | $x_1^{\bullet} x_2$ | $x_0 x_1$ | 0 | | |
| L3 | $(x_3 x_4)^*$ | $(x_2 x_4)^*$ | $(x_1 x_4)^*$ | $(x_0 x_4)^*$ | | | | | |
| L4 | | | | 1 | | | | | |

Fig 5B

| | 8 | 7 | 6 | 5 | 4 | 3 | 2 | 1 | 0 |
|---|---|---|---|---|---|---|---|---|---|
| L1 | $x_4$ | C2 | S2 | $x_1 x_3$ | $x_0 x_3$ | $x_0 x_2$ | $x_0^{\bullet} x_1$ | 0 | $x_0$ |
| L2 | $(x_3 x_4)^*$ | $(x_2 x_4)^*$ | $(x_1 x_4)^*$ | S1 | $x_1^{\bullet} x_2$ | $x_0 x_1$ | | | |

Fig 5C

Jouve, 18, rue Saint-Denis, 75001 PARIS

EP 0 652 507 A1

La présente invention concerne un circuit permettant d'élever au carré un nombre binaire X de n bits, noté ci-après $[x_{n-1}, x_{n-2}, ... x_0]$.

Pour élever un nombre binaire au carré, il est courant d'utiliser une table de carrés stockée dans une mémoire morte (ROM), le nombre X étant appliqué sur les lignes d'adresses de la mémoire ROM. Pour stocker tous les carrés d'un nombre X de n bits, la taille de la mémoire ROM doit être de $2^n$ mots de 2n bits. La surface occupée par une telle table en mémoire ROM est importante.

En outre, une mémoire ROM présente un temps d'accès élevé. Dans les technologies courantes actuelles, il n'est pas possible d'accéder à des mots successifs d'une mémoire ROM à une fréquence aussi élevée que de l'ordre de 50 MHz.

Une autre méthode pour élever le nombre X au carré consiste à utiliser un multiplieur binaire auquel on fournit deux fois le nombre X.

On décrit ci-après le fonctionnement d'un multiplieur binaire classique particulier, dit multiplieur de Booth, qui présente l'avantage d'être rapide et d'occuper une surface relativement faible.

En multipliant un nombre binaire X exprimé en décimal par $x_0 2^0 + x_1 2^1 + ... x_i 2^i + ... x_{n-1} 2^{n-1}$ et un nombre binaire Y exprimé en décimal par $y_0 2^0 + y_1 2^1 + ... y_i 2^i + ... y_{n-1} 2^{n-1}$, on obtient un produit XY égal, en décimal, à la somme de tous les produits $x_i y_j 2^{i+j}$, où $x_i = 0$ ou 1, $y_j = 0$ ou 1, et i et j varient entre 0 et n-1.

Les produits $x_i y_j$ (égaux à 0 ou 1) sont rangés dans un tableau de 2n-1 colonnes numérotées de 0 à 2n-2 de droite à gauche et correspondant à des bits de poids successifs du produit binaire XY, et de n lignes numérotées L1 à Ln.

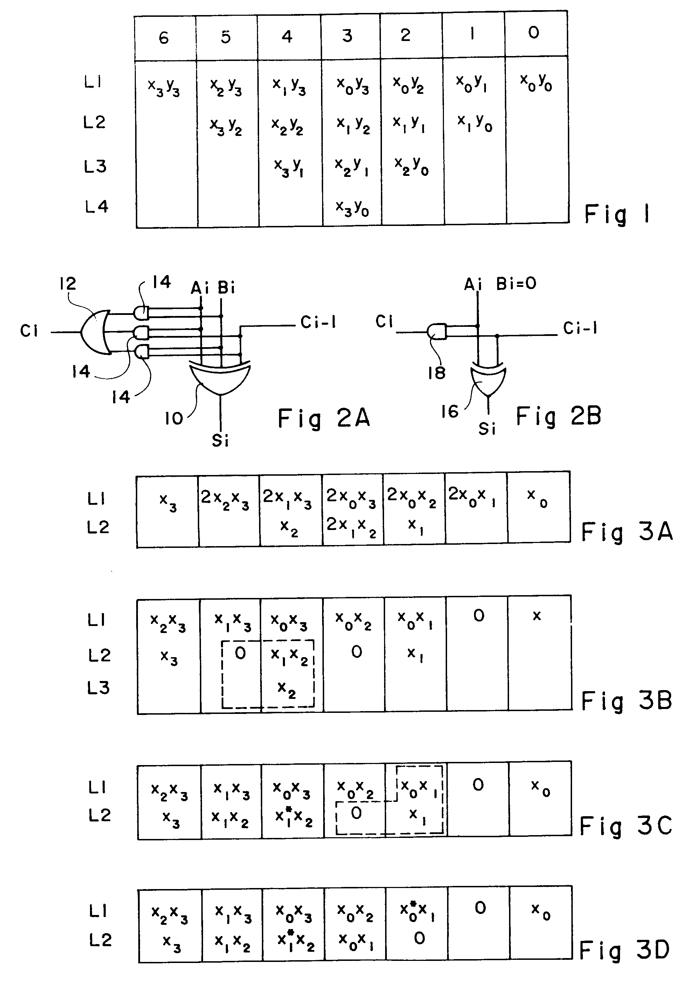

La figure 1 représente un tel tableau avec un exemple de nombres X et Y de quatre bits. Dans une colonne de rang k, on range successivement tous les produits $x_i y_j$ tels que i+j= k. On obtient, comme cela est représenté, un remplissage triangulaire du tableau. La valeur (0 ou 1) de chaque produit $x_i y_j$ est obtenue par des circuits de prétraitement qui effectuent un ET logique entre le bit $x_i$ du nombre X et le bit $y_j$ du nombre Y. Chaque ligne Lp (p=1, 2... n) correspond à un mot Lp dont les bits de rangs successifs sont constitués respectivement par les contenus des cases de la ligne Lp. Le produit binaire XY recherché est obtenu en effectuant la somme des mots L1 à Ln.

Ci après, on utilise indifféremment les termes "ligne" du tableau et "mot", ainsi que "case", "terme", et "bit" de tableau.

Pour effectuer la somme des mots L1 à Ln, il est courant d'utiliser une première série d'additionneurs pour sommer les mots par couples, une deuxième série d'additionneurs pour sommer, par couples, les sorties des additionneurs de la première série... Dans l'exemple de la figure 1, un premier additionneur formerait la somme des mots L1 et L2, un deuxième la somme des mots L3 et L4, et un troisième la somme des résultats fournis par les premier et deuxième additionneurs. Dans le cas général, il faut n-1 additionneurs pour sommer les n mots L.

Lorsque l'on utilise un multiplieur de Booth pour élever au carré un nombre X, on obtient un tableau du type de la figure 1 en remplaçant les y par des x.

La figure 2A représente une cellule d'addition élémentaire d'un additionneur classique. Deux bits de rang i, Ai, Bi, de deux mots à additionner sont fournis à une porte OU Exclusif 10 dont la sortie fournit la somme Si des bits Ai et Bi. En outre, la porte 10 reçoit une retenue Ci-1 provenant de la cellule précédente effectuant la somme des bits de rang i-1 des deux mots à additionner. La cellule fournit une retenue Ci à la cellule suivante par l'intermédiaire d'une porte OU 12 recevant les sorties de trois portes ET 14. Une première des portes 14 reçoit les bits Ai et Bi, une deuxième les bits Ai et Ci-1, et la troisième les bits Bi et Ci-1.

Un additionneur de p bits oomprend p-1 cellules du type de la figure 2A, appelées cellules complètes d'addition, et, pour le rang 0, une cellule plus simple, appelée cellule de demi-addition, décrite ultérieurement.

L'ensemble des portes 12 et 14 présente un certain temps de commutation. Ainsi, une retenue Ci se stabilise avec un certain retard par rapport au moment où les entrées Ai, Bi et Ci-1 sont stables. Il en est de même pour la retenue Ci-1 qui prend une valeur stable avec un certain retard par rapport au moment où les entrées de la cellule précédente sont stables... On dit que la retenue se propage de la cellule de rang 0 jusqu'à la cellule de rang le plus élevé. Le temps de stabilisation de la sortie d'un additionneur de p bits est sensiblement égal au temps de propagation, proportionnel à p.

Si, de plus, la sortie d'un premier additionneur est fournie à un deuxième additionneur, la sortie du deuxième additionneur ne peut se stabiliser que si la sortie du premier additionneur est stable ; le temps de stabilisation du dernier additionneur d'un ensemble d'additionneurs disposés en "cascade" croît avec le nombre d'additionneurs.

En conséquence, pour augmenter la rapidité d'un circuit, tel qu'un multiplieur de Booth, utilisant des additionneurs disposés en cascade, on a intérêt à diminuer la taille des additionneurs et le nombre d'additionneurs disposés en cascade.

Le tableau de la figure 1 présente certaines caractéristiques qui permettent de simplifier les additionneurs à utiliser et de diminuer leur temps de stabilisation. En effet, un grand nombre de cases du tableau sont vides (à 0). Pour sommer les mots L3 et L4, par exemple, il faut normalement un additionneur de 5 bits. Toutefois, les bits de rang 0 et 1 du mot L3 sont nuls et les bits de rang 0 à 2 et 4 du mot L4 sont nuls. Dans un additionneur qui somme les mots L3 et L4, les sorties S0 et S1 sont forcées à 0 et la sortie S2 est directement reliée au bit de rang 2 ($x_2y_0$) du mot L3. Pour sommer les bits de rang 3, on utilise une cellule de demi-addition et, finalement, pour sommer les bits de rang 4, puisque l'un de ces bits est nul, on utilise une cellule similaire à une cellule de demi-addition. Ainsi, au lieu d'utiliser un additionneur de 5 bits, on utilise un additionneur comprenant seulement deux cellules de demi-addition.

La figure 2B représente une cellule de demi-addition. Quand l'un des bits des nombres à additionner est nul, ou bien si la cellule d'addition est la première (elle ne reçoit pas de retenue), la structure de la cellule est plus simple. Dans le cas où l'un des bits, par exemple Bi, est nul, la cellule comprend une porte OU exclusif 16 recevant le bit non-nul Ai et la retenue Ci-1 fournie par la cellule précédente. Une porte ET 18 recevant les bits Ai et Ci-1 fournit la retenue Ci à la cellule suivante. La première cellule d'un additionneur a une structure identique sauf que i=0 et le bit B0 est fourni à la porte 16 à la place de la retenue Ci-1. La structure de la figure 2B est plus simple et plus rapide que celle de la figure 2A. On a donc intérêt à l'adopter chaque fois que possible.

Un objet de la présente invention est de prévoir un circuit élévateur au carré basé sur la méthode de Booth, qui soit particulièrement rapide.

Un autre objet de la présente invention est de prévoir un tel circuit élévateur au carré qui occupe une surface particulièrement faible.

Ces objets sont atteints grâce à un circuit élévateur au carré d'un nombre binaire X de n bits $x_0$ à $x_{n-1}$, comprenant des circuits de prétraitement pour former l'ensemble des produits $x_ix_j$ des bits du nombre X, où i et j varient entre 0 et n-1 tel que i≦j. Les sorties des circuits de prétraitement fournissent des mots tels que chacun est formé par une succession aussi complète que possible de produits choisis parmi ceux qui restent dudit ensemble après la formation du mot précédent, chaque produit $x_ix_j$ de cette succession étant classé à un rang i+j+1 du mot si i est différent de j ou à un rang 2i si i=j. Des additionneurs sont connectés pour former la somme des mots en tant que carré du nombre X.

Selon un mode de réalisation de la présente invention, les circuits de prétraitement comprennent des moyens pour former la somme des produits correspondant normalement à deux bits de même rang de deux mots, cette somme étant fournie sur l'un desdits deux bits, et l'autre desdits deux bits étant forcé à 0, la retenue de la somme étant propagée vers un bit normalement nul de l'un des mots.

Selon un mode de réalisation de la présente invention, les circuits de prétraitement forment directement à partir des bits du nombre X les valeurs des bits à modifier par ladite somme et la propagation de ladite retenue.

Selon un mode de réalisation de la présente invention, les additionneurs comprennent des additionneurs à sauvegarde de retenue disposés en cascade.

Selon un mode de réalisation de la présente invention, le circuit élève au carré un nombre signé X' de n+1 bits $x_0$ à $x_n$. Pour cela, les circuits de prétraitement ajoutent audit ensemble pour former lesdits mots, les termes : 1 classé au rang n+1 d'un mot, $x_n$ classé au rang 2n d'un mot, et les inverses des produits $x_ix_n$, où i varie de 0 à n-1, classés respectivement aux rangs i+n+1 d'un mot.

Ces objets, caractéristiques et avantages ainsi que d'autres de la présente invention seront exposés en détail dans la description suivante de modes de réalisation faite à titre non limitatif à l'aide des figures jointes parmi lesquelles :

la figure 1, précédemment décrite, est destinée à illustrer une méthode classique de multiplication de deux nombres binaires ;

les figures 2A et 2B, précédemment décrites, représentent des cellules élémentaires d'un additionneur ;

les figures 3A à 3D illustrent, à l'aide d'un exemple, des étapes d'optimisation d'un circuit élévateur au carré de nombres positifs selon l'invention ;

les figures 4A et 4B représentent deux modes de réalisation de circuit élévateur au carré selon l'invention, réalisés à partir des tableaux des figures 3B et 3D ;

les figures 5A à 5C illustrent, à l'aide d'un exemple, des étapes d'optimisation d'un circuit élévateur au carré de nombres signés selon l'invention ;

la figure 6 représente un mode de réalisation d'un circuit élévateur au carré réalisé à partir du tableau de la figure 5C ;

les figures 7A et 7B illustrent, à l'aide d'un autre exemple, une étape initiale et une étape finale d'une optimisation de circuit élévateur au carré de nombres positifs selon l'invention ;

la figure 8 représente un mode de réalisation avantageux de circuit élévateur au carré réalisé à partir du tableau de la figure 7B ;

les figures 9A et 9B illustrent, à l'aide d'un autre exemple, une étape initiale et une étape finale d'une optimisation de circuit élévateur au carré de nombres signés selon l'invention ; et

la figure 10 représente un mode de réalisation avantageux de circuit élévateur au carré réalisé à partir du tableau de la figure 9B.

La méthode de Booth et les circuits qui en découlent n'ont pas, à la connaissance de la demanderesse, été spécifiquement adaptés à la réalisation d'opérations d'élévation au carré. La présente invention propose une telle adaptation dont on verra qu'elle conduit à la réalisation de circuits particulièrement simples et rapides.

La figure 3A reprend le tableau de la figure 1 dans le cas de l'élévation au carré d'un nombre X, tous les couples de produits égaux étant regroupés. Dans chaque colonne, chaque couple de produits $x_i x_j$, $x_j x_i$ est remplacé par le produit $2 x_i x_j$. Les produits $x_i x_i$ (0 par 0 ou 1 par 1) sont égaux à $x_i$, comme cela apparaît dans les tableaux. La multiplication par 2 d'un produit $x_i x_j$ revient à décaler ce produit d'une colonne vers la gauche.

La figure 3B représente le résultat de ces décalages à gauche. On obtient un tableau de $n/2 + 1$ lignes (3 dans l'exemple) si n est pair, et $(n+1)/2$ lignes si n est impair. Chaque produit $x_i x_j$, tel que $i < j$ (ou bien $j < i$), est rangé dans la colonne de rang $i+j+1$ et chaque terme $x_k$ (correspondant à un produit $x_k x_k$) est rangé dans la colonne de rang $2k$.

La somme des mots L correspondant aux lignes du tableau constitue le carré $X^2$ recherché.

Ainsi, la présente invention propose, dans un premier temps, de réarranger les mots à additionner de façon à obtenir $n/2 + 1$ mots, si n est pair, ou $(n+1)/2$ mots, si n est impair, au lieu des n mots obtenus en appliquant directement la méthode de Booth. On notera de plus que les mots à additionner comprennent un grand nombre de bits à 0 (correspondant à des cases vides ou à 0). Ainsi, outre le fait que l'on réduit le nombre d'additionneurs, on peut utiliser des additionneurs comprenant un plus petit nombre de cellules complètes d'addition. Chaque additionneur sera donc plus rapide et moins encombrant.

Un autre aspect de la présente invention consiste à effectuer des opérations d'optimisation pour annuler des cases supplémentaires du tableau, de manière à annuler des cases extrêmes des lignes, ou même des lignes complètes.

La figure 3C illustre une étape d'optimisation du tableau de la figure 3B selon cet aspect. On a représenté dans le tableau 3B précédent, par un cadre en pointillés, les éléments que l'on modifie pour effectuer cette optimisation. Pour obtenir le tableau de la figure 3C, le terme $(x_1 x_2)$ de la ligne L2, colonne 4, est remplacé par la somme de ce terme et de celui $(x_2)$ de la ligne L3, colonne 4, ce qui fournit le terme $x_1 * x_2$ à la ligne L2, colonne 4. Le symbole $*$ indique que le nombre qui le précède est transformé en son inverse logique. Bien entendu, la somme des termes $x_1 x_2$ et $x_2$ génère une retenue $x_1 x_2$. Cette retenue est reportée dans une case vide à la ligne L2, colonne 5.

Selon encore un autre aspect de l'invention, une somme (par exemple $x_1 * x_2$ dans la colonne 4) et une retenue (par exemple $x_1 x_2$ dans la colonne 5) ne sont pas obtenues par une cellule d'additionneur qui somme les valeurs des cases correspondantes ($x_1 x_2$ et $x_2$), mais directement à partir des bits ($x_1$ et $x_2$) du nombre X par des portes logiques. Ceci permet de diminuer le nombre de portes logiques reliées en série et donc d'augmenter la vitesse de réponse du circuit.

L'étape de la figure 3C permet de supprimer une ligne du tableau. Pour obtenir le carré $X^2$, il suffit de sommer les deux mots correspondant aux deux lignes du tableau. On économise l'emploi d'un additionneur par rapport à un circuit réalisé à partir du tableau de la figure 3B.

La figure 3D représente une étape d'optimisation du tableau de la figure 3C. Les éléments modifiés dans le tableau de la figure 3C sont encadrés par des pointillés. Le terme $(x_0 x_1)$ en ligne L1, colonne 2, est remplacé par la somme de celui-ci et du terme $(x_1)$ en ligne L2, colonne 2. On obtient, en ligne L1, colonne 2, le terme $x_0 * x_1$, et la retenue, $x_0 x_1$, est reportée en ligne L2, colonne 3 où elle remplit une case vide. Comme précédemment, ces somme et retenue sont obtenues directement à partir des bits $x_0$ et $x_1$ du nombre X.

Cette optimisation permet de faire apparaître une case vide (un 0) supplémentaire à l'extrémité droite de la ligne L2 (du mot L2). Ainsi, pour sommer les mots L1 et L2, il faut un additionneur de 4 bits seulement au lieu de 5 dans le cas de la figure 3C. Les bits de rangs 3 à 6 des mots L1 et L2 sont fournis à l'additionneur et les bits de rangs 0 à 2 du mot L1 constituent directement les bits de rangs 0 à 2 du nombre $X^2$. Cette optimisation permet donc de diminuer la taille de l'additionneur, et par conséquent la taille et le temps de réponse du circuit.

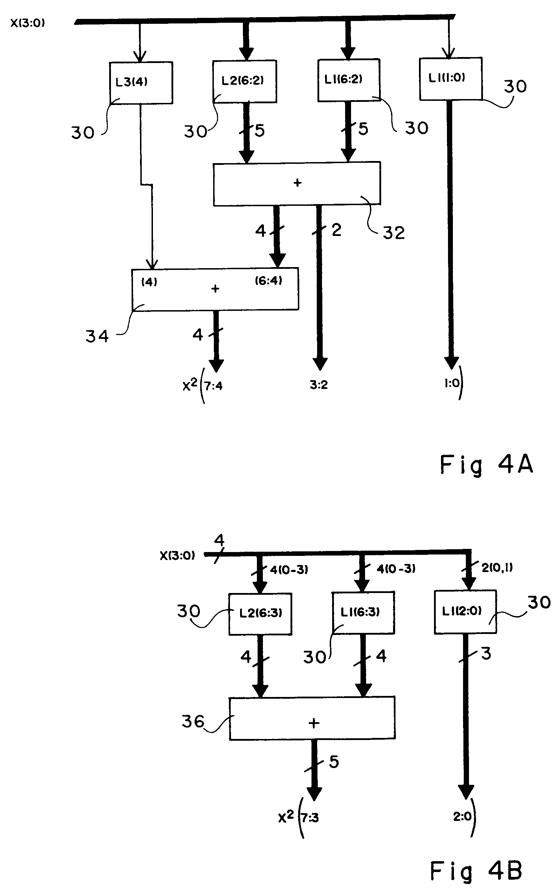

La figure 4A représente un circuit élévateur au carré réalisé à partir du tableau de la figure 3B. Ce circuit comprend des circuits de prétraitement 30 recevant les bits du nombre X à élever au carré. Ces circuits de prétraitement fournissent tous les termes non-nuls ($x_i x_j$, $x_k$) du tableau de la figure 3B ; ils sont obtenus directement à partir des bits x du nombre X par des portes ET. Un additionneur 5 bits 32 somme les bits de rangs 2 à 6 de mots L1 et L2. Les bits de rangs 0 et 1 du mot L1 sont fournis directement en tant que bits de rangs 0 et 1 du carré $X^2$. Un additionneur 4 bits 34 somme le mot L3 aux 4 bits de poids fort de sortie de l'additionneur 32, les deux sorties de poids faible étant fournies directement en tant que bits de rangs 2 et 3 du carré $X^2$. Tous les bits sauf un du mot L3 étant nuls, l'additionneur 34 ne comprend que des cellules de demi-addition.

La figure 4B représente un mode de réalisation de circuit élévateur au carré selon l'invention issu de l'étape d'optimisation de la figure 3D. Ce circuit comprend aussi des circuits de prétraitement 30 recevant les bits du nombre X et fournissant tous les termes non-nuls du tableau de la figure 3D. Ces termes sont obtenus directement à partir de bits x du nombre X par des combinaisons adéquates de portes logiques que l'homme du métier saura trouver par une simple consultation du tableau (par exemple, le terme $x_0 * x_1$ est obtenu par une porte ET recevant le bit $x_1$ et l'inverse du bit $x_0$). Les bits de rangs 0 à 2 du mot L1 sont fournis en tant que bits de rangs 0 à 2 du nombre $X^2$, et les bits de rangs 3 à 6 des mots L1 et L2 sont sommés par l'additionneur 36 pour fournir les 5 bits restants de rangs 3 à 7 du nombre $X^2$. Avec ce

mode de réalisation, on économise un additionneur par rapport à celui de la figure 4A.

Jusqu'ici, on a supposé que le nombre X était positif. Toutefois, la présente invention s'applique également à des nombres binaires signés X' de $n+1$ bits $[x_n, x_{n-1}, ... x_0]$, dont le bit $x_n$ est un bit de signe. Un nombre signé X' est exprimé, en décimal, par la somme des produits $x_i 2^i$ (i variant de 0 à n-1) et du terme $-x_n 2^n$. Lorsque l'on élève ce nombre au carré, on obtient, en décimal, la somme des termes suivants :

- $X^2$, carré en décimal du nombre binaire positif $X = [x_{n-1}, x_{n-2}, ... x_0]$ ;
- la somme des termes $-x_i x_n 2^{i+n+1}$, où i varie de 0 à n-1 ; et
- le terme $x_n 2^{2n}$.

Si l'on applique la règle classique du "complément à 2" pour exprimer des nombres binaires signés, où l'opposé d'un nombre binaire est égal à son inverse plus 1, le carré $X'^2$ s'exprime, en décimal, par la somme des termes $X^2$, $x_n 2^{2n}$, $2^{n+1}$, et des produits $(x_i x_n)*2^{i+n+1}$, où i varie de 0 à n-1.

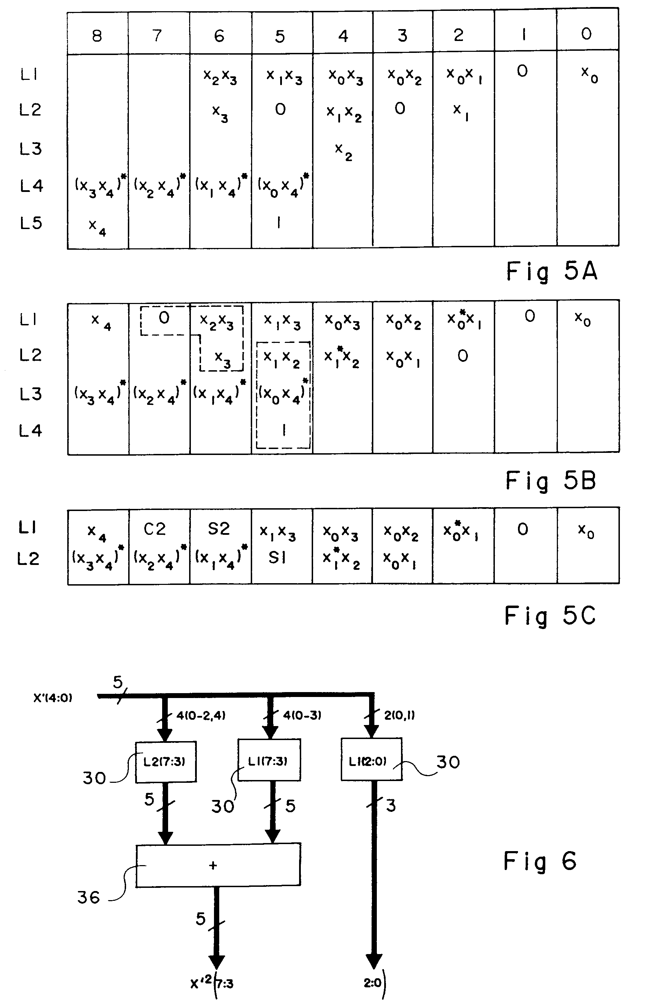

La figure 5A représente un tableau regroupant ces termes, à l'aide d'un exemple où le nombre signé X' est de 5 bits (4 bits et 1 bit de signe). Les termes du nombre $X^2$ sont disposés de la même manière que dans le tableau de la figure 3B dans les colonnes 0 à 6. En outre, dans deux lignes supplémentaires (L4 et L5), on trouve les termes $(x_i x_n)*$, où i varie de 0 à n-1, classés dans les colonnes respectives $i+n+1$. On trouve dans la colonne n+1 (5), le terme 1, et dans la colonne 2n (8), le terme $x_n$ ($x_4$). Comme précédemment, il faut sommer les lignes du tableau pour obtenir le carré $X'^2$ recherché. L'organisation de la figure 5A n'est pas optimale mais est déjà plus avantageuse qu'une organisation que l'on obtiendrait en appliquant la méthode de Booth.

La figure 5B représente une étape d'optimisation du tableau de la figure 5A. Les termes correspondant au nombre $X^2$ sont optimisés selon ce qui a été décrit en relation avec la figure 3D. Le terme $x_4$ de la colonne 8 est reporté à la première ligne de la colonne 8. On obtient ainsi $n/2 +2$ lignes à additionner (si n est pair) alors qu'avec la méthode de Booth il fallait additionner au moins n+1 lignes.

La figure 5C représente un tableau qui illustre une étape d'optimisation supplémentaire selon l'invention. Dans le tableau de la figure 5B, on a entouré par des pointillés les termes affectés par cette optimisation. Le terme $(x_1 x_2)$ de la ligne L2, colonne 5, est remplacé par la somme des termes de la colonne 5, lignes L2 à L4 $(x_1 x_2, (x_3 x_4)*, 1)$. Cette somme est notée S1 dans le tableau de la figure 5C et s'exprime par :

$$S1 = x_3 x_4 \text{ XOU } x_1 x_2,$$

où XOU désigne l'opérateur logique OU Exclusif. La retenue de cette somme est reportée dans la colonne 6. Cette retenue est sommée aux termes $(x_2 x_3, x_3)$ des lignes L1 et L2, colonne 6 pour former une somme S2 remplaçant le terme $(x_2 x_3)$ de la ligne L1, colonne 6. Cette somme S2 s'exprime par :

$$S2 = x_2 * x_3 \text{ XOU } x_1 x_2 \text{ OU } (x_0 x_4)*.$$

La retenue C2 de cette somme S2 est insérée à la case vide de la ligne L1, colonne 7. La retenue C2 s'exprime par :

$$C2 = x_3(x_2 \text{ OU } (x_0 x_4)*).$$

On dira que la retenue de la somme des termes de la colonne 5 a été propagée vers une case vide d'une colonne (7) de rang supérieur.

Ainsi, on libère les cases de rangs 6 à 8 de la ligne L2, qui reçoivent respectivement les termes restants $(x_1 x_4)*$, $(x_2 x_4)*$, et $(x_3 x_4)*$ de la ligne L3. On arrive à réduire le tableau de deux lignes.

La figure 6 représente un mode de réalisation de circuit élévateur au carré selon l'invention issu de l'optimisation de la figure 5C. Ce circuit se distingue de celui de la figure 4B par le fait que les circuits de prétraitement 30 fournissent les valeurs du tableau de la figure 5C et que l'additionneur 36 est un additionneur de 5 bits sommant les termes des colonnes 3 à 7 de la figure 5C. Les termes de la colonne 8 sont ignorés car ils correspondent au bit de signe, qui est toujours nul car un carré est positif. En outre, l'additionneur 36 de 5 bits devrait normalement fournir la somme sur 5 bits et 1 bit de retenue. A la figure 6, le bit de retenue de l'additionneur 36, qui constituerait un neuvième bit du carré $X'^2$, est ignoré.

Un nombre binaire X' de n bits et 1 bit de signe peut prendre des valeurs décimales entre $-2^n$ et $2^n - 1$. Dans un grand nombre de cas, par exemple si le nombre X' correspond à la différence de deux nombres binaires positifs de n bits, le nombre X' ne prend des valeurs décimales qu'entre $-(2^n -1)$ et $2^n -1$ ; dans ce cas, le carré du nombre X' s'exprime sur 2n bits. Par contre, si le nombre X' peut prendre la valeur $-2^n$, le carré de ce nombre s'exprime sur 2n+1 bits ; on tient alors compte de la colonne de rang 2n.

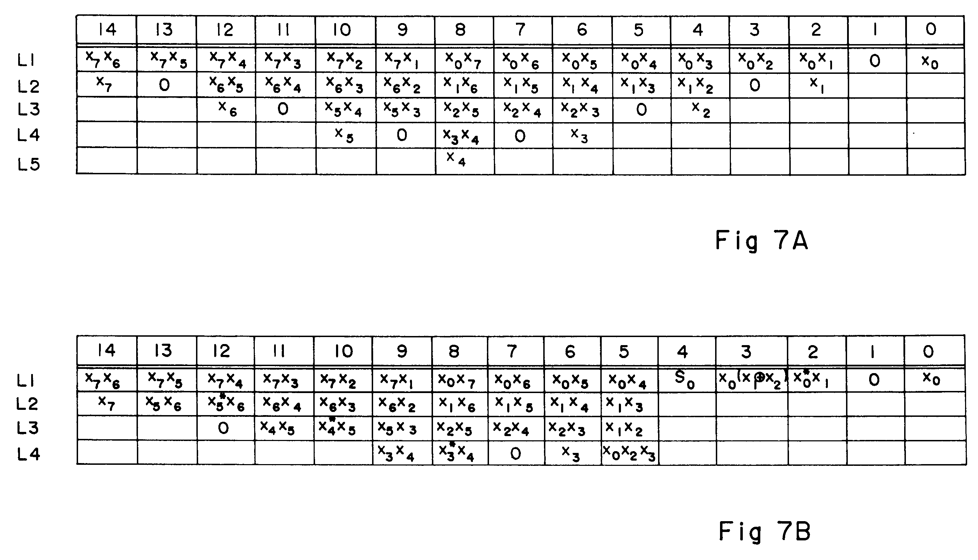

Les figures 7A et 7B représentent des tableaux correspondant aux étapes d'optimisation des figures 3A et 3D avec l'exemple d'un nombre X positif de n=8 bits.

Dans la figure 7A, les termes sont répartis selon la règle générale exposée en relation avec la figure 3B. Le tableau comprend 5 lignes au lieu des 8 lignes obtenues en appliquant la méthode de Booth.

Dans la figure 7B, le nombre de lignes du tableau a été réduit à 4 selon ce qui a été décrit en relation avec la figure 3C et on a annulé les termes les plus à droite jusqu'à la colonne 4 des lignes 2 et 3 selon ce qui a été décrit en relation avec la figure 3D. Le terme de la ligne L1, colonne 2 $(x_0 x_1)$ a été remplacé par la somme de ce terme et de celui $(x_1)$ de la ligne L2, colonne 2. Le terme $(x_0 x_2)$ de la ligne L1, colonne 3, est remplacé par la somme de ce terme et de la retenue de la somme effectuée dans la colonne 2. Dans la colonne 3, le signe + entouré correspond à l'opération OU Exclusif. Le terme de la ligne L1, colonne

4 ($x_0x_3$), est remplacé par la somme des termes des lignes L1 à L3 de la colonne 4 et de la retenue de la somme effectuée dans la colonne 3. Cette somme S0 est exprimée par :

$$S0 = x_0x_3 \text{ XOU } x_2(x_0 \text{ OU } x_1{}^*).$$

Comme la somme S0 correspond à la somme de quatre termes, on a une double retenue. L'une, $x_1x_2$, est insérée à la ligne L3, colonne 5, et l'autre, $x_0x_2x_3$, est insérée à la ligne L4, colonne 5, dans deux cases vides respectives.

Bien entendu, comme on l'a précédemment mentionné, les sommes insérées dans des cases du tableau ne sont pas obtenues par des additionneurs, mais directement par des circuits logiques, à partir des bits du nombre X. Ainsi, par exemple, le terme $x_0x_2x_3$ de la ligne L4, colonne 5, est obtenu par une porte ET à trois entrées recevant les bits $x_0$, $x_2$ et $x_3$ respectivement.

Dans le tableau de la figure 7B, on a également annulé le terme de la ligne L4, colonne 10, en le sommant au terme de la ligne précédente en reportant la retenue dans la colonne 11, et on a annulé le terme de la ligne L3, colonne 12, en le sommant au terme de la ligne précédente en reportant la retenue à la place du 0 de la ligne L2, colonne 13.

En faisant apparaître des 0 aux extrémités des lignes, on simplifie la structure des additionneurs qui vont additionner ces lignes. Notamment, en faisant apparaître des 0 à l'extrémité droite des lignes, le nombre de bits des additionneurs diminue. Une optimisation particulièrement bonne est obtenue lorsque l'on a supprimé le plus grand nombre possible de termes aux extrémités gauche et droite des lignes du tableau. Ces suppressions peuvent se faire de nombreuses manières qui apparaîtront à l'homme du métier, les suppressions illustrées dans les tableaux n'en constituent que des exemples. En effet, les termes de chaque colonne peuvent être permutés et chaque permutation peut entraîner une somme de termes différente pour annuler une case du tableau.

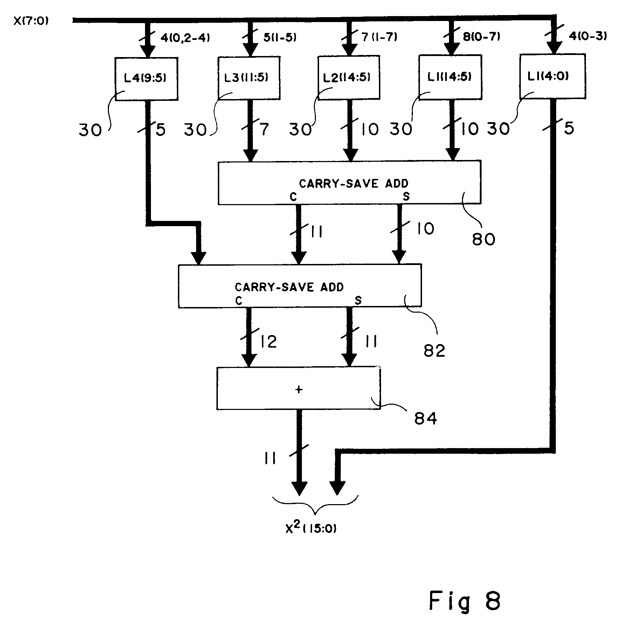

La figure 8 représente un mode de réalisation particulièrement avantageux de circuit élévateur au carré selon l'invention issu de l'optimisation du tableau de la figure 7B. Les termes de rangs 0 à 4 de la première ligne du tableau de la figure 7B sont fournis directement en tant que bits de rangs 0 à 4 du carré $X^2$ à fournir.

Selon un mode de réalisation avantageux de l'invention, on utilise des additionneurs à sauvegarde de retenue (CARRY-SAVE) pour effectuer les sommes. Un additionneur à sauvegarde de retenue est un additionneur présentant trois entrées et deux sorties. Les trois entrées reçoivent trois nombres binaires à additionner. Une cellule élémentaire d'un tel additionneur est similaire à celle d'un additionneur normal, telle que représentée dans la figure 2A, sauf que l'entrée Ci-1 de la cellule reçoit le bit de rang i du troisième nombre à additionner et que la sortie Ci de la porte OU 12 n'est pas reliée à la cellule suivante. Les sorties Si des portes OU exclusif 10 constituent une première sortie S de l'additionneur à sauvegarde de retenue et les sorties Ci des portes OU 12 constituent la deuxième sortie C de cet additionneur. En outre, les rangs des sorties C sont augmentés de 1. Un tel additionneur a l'avantage de ne pas présenter de retard de stabilisation dû à la propagation des retenues. Son temps de réponse est approximativement égal au temps de commutation de la porte OU exclusif 10.

Un premier de ces additionneurs à sauvegarde de retenue, 80, reçoit les bits de rangs 5 à 14 des mots L1 à L3. Les trois bits de rangs 12 à 14 du mot L3 étant nuls, les cellules élémentaires correspondantes de l'additionneur 80, qui ne doivent alors sommer que deux bits chacun, sont du type simple de la figure 2B.

Un deuxième additionneur à sauvegarde de retenue 82 reçoit les deux sorties de l'additionneur 80 et les bits de rangs 5 à 9 du mot L4. Comme les bits de rangs 10 à 14 du mot L4 sont nuls, les cellules correspondantes de l'additionneur 82 sont du type simple de la figure 2B.

Finalement, un additionneur normal (sans sauvegarde de retenue) 84 somme les sorties de l'additionneur 82 et fournit les bits de rangs 5 à 15 du carré $X^2$.

L'additionneur 80 est un additionneur de 10 bits. Sa sortie S est fournie sur 10 bits et sa sortie C sur 11. Ainsi, l'additionneur 82 est un additionneur de 11 bits et fournit une sortie S sur 11 bits et une sortie C sur 12 bits. L'additionneur 84 est donc un additionneur de 12 bits et fournit normalement une sortie sur 13 bits. Seulement 11 parmi ces 13 bits sont utilisés, les autres étant nuls. Il s'avère en fait, dans l'exemple de la figure 7B, que les trois derniers bits de la sortie C de l'additionneur 82 sont toujours nuls ; ceci permet de simplifier les additionneurs 82 et 84 en utilisant pour ces bits à 0 des cellules de demi-addition dans l'additionneur 84 et de supprimer les portes 12 et 14 des cellules correspondantes de l'additionneur 82.

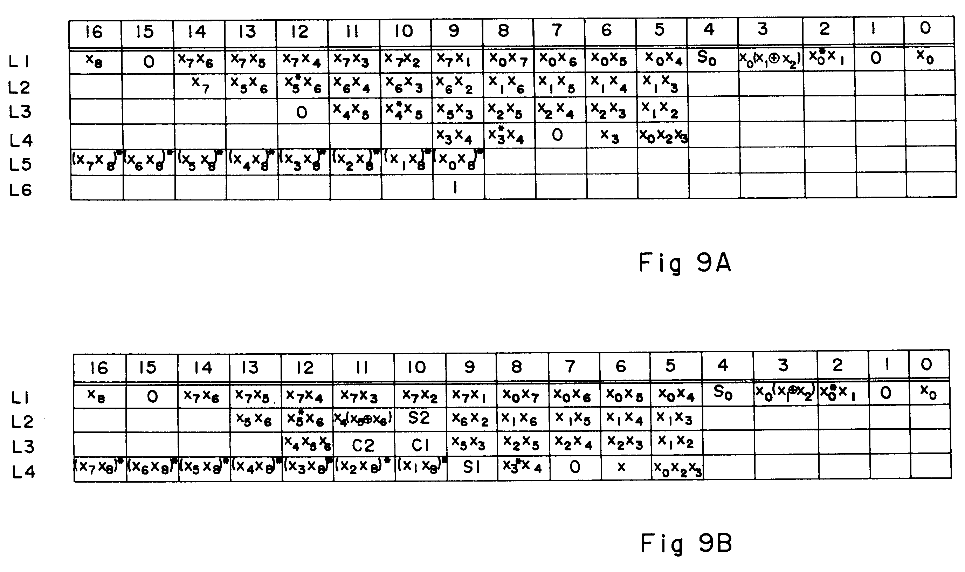

La figure 9A représente un tableau, correspondant à celui de la figure 5B, pour un nombre X' de n=8 bits $x_0$ à $x_7$ et d'un bit de signe $x_8$. Ce tableau est rempli selon les règles générales déjà énoncées en relation avec les figures 5A et 5B.

La figure 9B représente une optimisation du tableau de la figure 9A selon ce qui a été décrit en relation avec la figure 5C. En effectuant des sommes qui ne seront pas décrites en détail, on a annulé des termes dans les lignes afin de pouvoir remonter les lignes 5 et 6 de la figure 9A. Les nouvelles valeurs des termes, provenant de sommes de termes de mêmes colonnes et de propagations de retenues, sont inscrites dans les cases. La somme S1 à la ligne L4, colonne 9, s'exprime par $x_3x_4$ XOU $x_0x_8$. La retenue C1 de cette somme, dans la ligne L3, colonne 10, s'exprime par $x_3x_4$ OU $(x_0x_8)^*$. La somme S2 dans la ligne L2, colonne 10, s'exprime par $x_4{}^*x_5$ XOU $x_6x_3$ et la rete-

nue C2 de cette somme, dans la ligne L3, colonne 11, s'exprime par $x_4*x_5x_6x_3$.

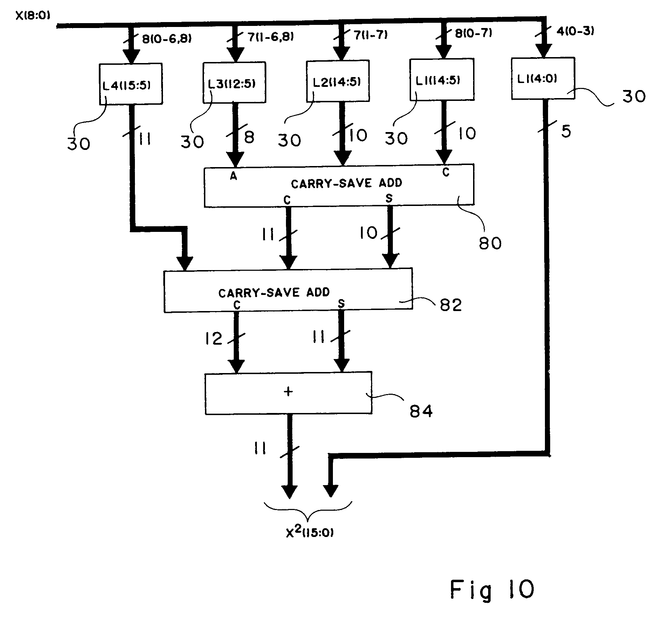

La figure 10 représente un mode de réalisation de circuit élévateur au carré selon l'invention issu de l'optimisation de la figure 9B. Ce circuit est similaire à celui de la figure 8 sauf que l'on fournit à l'additionneur 80 un bit supplémentaire, de rang 12, du mot L3, et à l'additionneur 82 six bits supplémentaires, de rangs 10 à 15 du mot L4. Bien entendu, les circuits de prétraitement 30 de ce circuit sont distincts de ceux de la figure 8 puisque les fonctions logiques qu'ils doivent assurer, indiquées dans le tableau de la figure 9B, sont distinctes.

La présente invention a été décrite à l'aide d'exemples particuliers de simplifications possibles de tableaux. Bien entendu, de nombreuses autres possibilités restent offertes à l'homme du métier en permutant les termes des colonnes et en annulant des termes à sa discrétion.

## Revendications

1. Circuit élévateur au carré d'un nombre binaire X de n bits $x_0$ à $x_{n-1}$, comprenant :
   - des circuits de prétraitement (30) pour former l'ensemble des produits $x_ix_j$ des bits du nombre X, où i et j varient entre 0 et n-1 tel que $i \leqq j$, les sorties des circuits de prétraitement fournissant des mots (L0, L1...) tels que chacun est formé par une succession aussi complète que possible de produits choisis parmi ceux qui restent dudit ensemble après la formation du mot précédent, chaque produit $x_ix_j$ de cette succession étant classé à un rang i+j+1 du mot si i est différent de j ou à un rang 2i si i=j ; et
   - des additionneurs connectés pour former la somme des mots en tant que carré du nombre X ;

   caractérisé en ce que des circuits de prétraitement (30) comprennent des moyens pour former la somme des produits correspondant normalement à des bits de même rang d'au moins deux mots, cette somme étant fournie en tant que l'un desdits bits de même rang, et l'autre desdits bits de même rang étant forcé à 0, la retenue de la somme étant propagée vers un bit normalement nul de l'un des mots, de manière à réduire la longueur des mots.

2. Circuit élévateur au carré selon la revendication 1, caractérisé en ce que les circuits de prétraitement forment directement à partir des bits du nombre X les valeurs des bits à modifier par ladite somme et par la propagation de ladite retenue.

3. Circuit élévateur au carré selon la revendication 1, caractérisé en ce que les additionneurs comprennent des additionneurs à sauvegarde de retenue (80, 82) disposés en cascade.

4. Circuit élévateur au carré, selon l'une quelconque des revendications 1 à 3, d'un nombre signé X' de n+1 bits $x_0$ à $x_n$, caractérisé en ce que les circuits du prétraitement comprennent des moyens pour ajouter audit ensemble pour former lesdits mots, les termes :

   1 classé au rang n+1 d'un mot,
   $x_n$ classé au rang 2n d'un mot, et
   les inverses des produits $x_ix_n$, où i varie de 0 à n-1, classés respectivement aux rangs i+n+1 d'un mot.

5. Circuit élévateur au carré de nombres signés selon la revendication 4, caractérisé en ce que n=8 et en ce que les mots à additionner comprennent :
   - un premier mot (L1) de 15 bits successifs $x_0$, 0, $x_0*x_1$, $x_0(x_1$ XOU $x_2)$, $x_0x_3$ XOU $x_2(x_0$ OU $x_1*)$, $x_0x_4$, $x_0x_5$, $x_0x_6$, $x_0x_7$, $x_1x_7$, $x_2x_7$, $x_3x_7$, $x_4x_7$, $x_5x_7$, $x_0x_7$ ;
   - un deuxième mot (L2) de 15 bits successifs 0, 0, 0, 0, 0, $x_1x_3$, $x_1x_4$, $x_1x_5$, $x_1x_6$, $x_2x_6$, $x_4*x_5$ XOU $x_6x_3$, $x_4(x_5$ XOU $x_6)$, $x_5*x_6$, $x_5x_6$, $x_7$ ;
   - un troisième mot (L3) de 13 bits successifs 0, 0, 0, 0, 0, $x_1x_2$, $x_2x_3$, $x_2x_4$, $x_2x_5$, $x_3x_5$, $x_3x_4$ OU $(x_0x_8)*$, $x_4*x_5x_6x_3$, $x_4x_5x_6$ ;
   - un quatrième mot (L4) de 16 bits successifs 0, 0, 0, 0, 0, $x_0x_2x_3$, $x_3$, 0, $x_3*x_4$, $x_3x_4$ XOU $x_0x_8$, $(x_1x_8)*$, $(x_2x_8)*$, $(x_3x_8)*$, $(x_4x_8)*$, $(x_5x_8)*$, $(x_0x_8)*$ ;

   les bits d'un rang donné supérieur à 4 étant permutables entre les mots.

| | 6 | 5 | 4 | 3 | 2 | 1 | 0 |
|---|---|---|---|---|---|---|---|
| L1 | $x_3y_3$ | $x_2y_3$ | $x_1y_3$ | $x_0y_3$ | $x_0y_2$ | $x_0y_1$ | $x_0y_0$ |
| L2 | | $x_3y_2$ | $x_2y_2$ | $x_1y_2$ | $x_1y_1$ | $x_1y_0$ | |
| L3 | | | $x_3y_1$ | $x_2y_1$ | $x_2y_0$ | | |
| L4 | | | | $x_3y_0$ | | | |

Fig 1

Fig 2A

Fig 2B

| | 6 | 5 | 4 | 3 | 2 | 1 | 0 |
|---|---|---|---|---|---|---|---|
| L1 | $x_3$ | $2x_2x_3$ | $2x_1x_3$ | $2x_0x_3$ | $2x_0x_2$ | $2x_0x_1$ | $x_0$ |
| L2 | | | $x_2$ | $2x_1x_2$ | $x_1$ | | |

Fig 3A

| | 6 | 5 | 4 | 3 | 2 | 1 | 0 |
|---|---|---|---|---|---|---|---|
| L1 | $x_2x_3$ | $x_1x_3$ | $x_0x_3$ | $x_0x_2$ | $x_0x_1$ | 0 | $x$ |
| L2 | $x_3$ | 0 | $x_1x_2$ | 0 | $x_1$ | | |
| L3 | | | $x_2$ | | | | |

Fig 3B

| | 6 | 5 | 4 | 3 | 2 | 1 | 0 |
|---|---|---|---|---|---|---|---|
| L1 | $x_2x_3$ | $x_1x_3$ | $x_0x_3$ | $x_0x_2$ | $x_0x_1$ | 0 | $x_0$ |
| L2 | $x_3$ | $x_1x_2$ | $x_1^{*}x_2$ | 0 | $x_1$ | | |

Fig 3C

| | 6 | 5 | 4 | 3 | 2 | 1 | 0 |
|---|---|---|---|---|---|---|---|
| L1 | $x_2x_3$ | $x_1x_3$ | $x_0x_3$ | $x_0x_2$ | $x_0^{*}x_1$ | 0 | $x_0$ |
| L2 | $x_3$ | $x_1x_2$ | $x_1^{*}x_2$ | $x_0x_1$ | 0 | | |

Fig 3D

X(3:0)

L3(4)

L2(6:2)

LI(6:2)

LI(1:0)

30

30

30

30

5

5

+

4

2

32

(4)          +          (6:4)

34

4

$x^2$(7:4

3:2

1:0)

Fig 4A

X(3:0)

4

4(0-3)

4(0-3)

2(0,1)

30

L2(6:3)

LI(6:3)

LI(2:0)

30

4

30

4

3

36

+

5

$x^2$(7:3

2:0)

Fig 4B

| | 8 | 7 | 6 | 5 | 4 | 3 | 2 | 1 | 0 |
|---|---|---|---|---|---|---|---|---|---|
| L1 | | | $x_2 x_3$ | $x_1 x_3$ | $x_0 x_3$ | $x_0 x_2$ | $x_0 x_1$ | 0 | $x_0$ |
| L2 | | | $x_3$ | 0 | $x_1 x_2$ | 0 | $x_1$ | | |
| L3 | | | | | $x_2$ | | | | |
| L4 | $(x_3 x_4)^*$ | $(x_2 x_4)^*$ | $(x_1 x_4)^*$ | $(x_0 x_4)^*$ | | | | | |
| L5 | $x_4$ | | | 1 | | | | | |

Fig 5A

| | 8 | 7 | 6 | 5 | 4 | 3 | 2 | 1 | 0 |
|---|---|---|---|---|---|---|---|---|---|
| L1 | $x_4$ | 0 | $x_2 x_3$ | $x_1 x_3$ | $x_0 x_3$ | $x_0 x_2$ | $x_0^* x_1$ | 0 | $x_0$ |
| L2 | | | $x_3$ | $x_1 x_2$ | $x_1^* x_2$ | $x_0 x_1$ | 0 | | |
| L3 | $(x_3 x_4)^*$ | $(x_2 x_4)^*$ | $(x_1 x_4)^*$ | $(x_0 x_4)^*$ | | | | | |
| L4 | | | | 1 | | | | | |

Fig 5B

| | 8 | 7 | 6 | 5 | 4 | 3 | 2 | 1 | 0 |
|---|---|---|---|---|---|---|---|---|---|
| L1 | $x_4$ | C2 | S2 | $x_1 x_3$ | $x_0 x_3$ | $x_0 x_2$ | $x_0^* x_1$ | 0 | $x_0$ |
| L2 | $(x_3 x_4)^*$ | $(x_2 x_4)^*$ | $(x_1 x_4)^*$ | S1 | $x_1^* x_2$ | $x_0 x_1$ | | | |

Fig 5C

Fig 6

**Fig 7A**

| | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| L1 | $x_0$ | 0 | $x_0x_1$ | $x_0x_2$ | $x_0x_3$ | $x_0x_4$ | $x_0x_5$ | $x_0x_6$ | $x_0x_7$ | $x_7x_1$ | $x_7x_2$ | $x_7x_3$ | $x_7x_4$ | $x_7x_5$ | $x_7x_6$ |
| L2 | | | $x_1$ | 0 | $x_1x_2$ | $x_1x_3$ | $x_1x_4$ | $x_1x_5$ | $x_1x_6$ | $x_6x_2$ | $x_6x_3$ | $x_6x_4$ | $x_6x_5$ | 0 | $x_7$ |
| L3 | | | | | $x_2$ | 0 | $x_2x_3$ | $x_2x_4$ | $x_2x_5$ | $x_5x_3$ | $x_5x_4$ | 0 | $x_6$ | | |
| L4 | | | | | | | $x_3$ | 0 | $x_3x_4$ | 0 | $x_5$ | | | | |
| L5 | | | | | | | | | $x_4$ | | | | | | |

**Fig 7B**

| | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| L1 | $x_0$ | 0 | $x_0^*x_1$ | $x_0(x_1 \oplus x_2)$ | $S_0$ | $x_0x_4$ | $x_0x_5$ | $x_0x_6$ | $x_0x_7$ | $x_7x_1$ | $x_7x_2$ | $x_7x_3$ | $x_7x_4$ | $x_7x_5$ | $x_7x_6$ |
| L2 | | | | | | $x_1x_3$ | $x_1x_4$ | $x_1x_5$ | $x_1x_6$ | $x_6x_2$ | $x_6x_3$ | $x_6x_4$ | $x_5^*x_6$ | $x_5x_6$ | $x_7$ |
| L3 | | | | | | $x_1x_2$ | $x_2x_3$ | $x_2x_4$ | $x_2x_5$ | $x_5x_3$ | $x_4^*x_5$ | $x_4x_5$ | 0 | | |
| L4 | | | | | | $x_0x_2x_3$ | $x_3$ | 0 | $x_3^*x_4$ | $x_3x_4$ | | | | | |

X(7:0)

4(0,2-4)     5(1-5)      7(1-7)      8(0-7)      4(0-3)

L4(9:5)     L3(11:5)    L2(14:5)    L1(14:5)    L1(4:0)

30    5    30    7    30    10    30    10    30    5

CARRY-SAVE ADD

C                    S

11                   10                   80

CARRY-SAVE ADD

C                    S

12                   11                   82

+

84

11

$X^2$ (15:0)

Fig 8

**Fig 9A**

| | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| L1 | $x_0$ | 0 | $x_0^{*}x_1$ | $x_0(x_1 \oplus x_2)$ | $S_0$ | $x_0x_4$ | $x_0x_5$ | $x_0x_6$ | $x_0x_7$ | $x_7x_1$ | $x_7x_2$ | $x_7x_3$ | $x_7x_4$ | $x_7x_5$ | $x_7x_6$ | 0 | $x_8$ |
| L2 | | | | | | $x_1x_3$ | $x_1x_4$ | $x_1x_5$ | $x_1x_6$ | $x_6x_2$ | $x_6x_3$ | $x_6x_4$ | $x_5^{*}x_6$ | $x_5x_6$ | $x_7$ | | |
| L3 | | | | | | $x_1x_2$ | $x_2x_3$ | $x_2x_4$ | $x_2x_5$ | $x_5x_3$ | $x_4^{*}x_5$ | $x_4x_5$ | 0 | | | | |
| L4 | | | | | | $x_0x_2x_3$ | $x_3$ | 0 | $x_3^{*}x_4$ | $x_3x_4$ | | | | | | | |
| L5 | | | | | | | | | | $(x_0x_8)^{*}$ | $(x_1x_8)^{*}$ | $(x_2x_8)^{*}$ | $(x_3x_8)^{*}$ | $(x_4x_8)^{*}$ | $(x_5x_8)^{*}$ | $(x_6x_8)^{*}$ | $(x_7x_8)^{*}$ |
| L6 | | | | | | | | | | 1 | | | | | | | |

Fig 9A

**Fig 9B**

| | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| L1 | $x_0$ | 0 | $x_0^{*}x_1$ | $x_0(x_1 \oplus x_2)$ | $S_0$ | $x_0x_4$ | $x_0x_5$ | $x_0x_6$ | $x_0x_7$ | $x_7x_1$ | $x_7x_2$ | $x_7x_3$ | $x_7x_4$ | $x_7x_5$ | $x_7x_6$ | 0 | $x_8$ |
| L2 | | | | | | $x_1x_3$ | $x_1x_4$ | $x_1x_5$ | $x_1x_6$ | $x_6x_2$ | S2 | $x_4(x_6 \oplus x_8)$ | $x_5^{*}x_6$ | $x_5x_6$ | | | |
| L3 | | | | | | $x_1x_2$ | $x_2x_3$ | $x_2x_4$ | $x_2x_5$ | $x_5x_3$ | C1 | C2 | $x_4^{*}x_5x_6$ | | | | |
| L4 | | | | | | $x_0x_2x_3$ | $x$ | 0 | $x_3^{*}x_4$ | S1 | $(x_1x_8)^{*}$ | $(x_2x_8)^{*}$ | $(x_3x_8)^{*}$ | $(x_4x_8)^{*}$ | $(x_5x_8)^{*}$ | $(x_6x_8)^{*}$ | $(x_7x_8)^{*}$ |

Fig 9B

13

X(8:0)

8(0-6,8)   7(1-6,8)   7(1-7)   8(0-7)   4(0-3)

L4(15:5)   L3(12:5)   L2(14:5)   LI(14:5)   LI(4:0)   30

30   11   30   8   30   10   30   10   5

A   CARRY-SAVE ADD   C
C   S   80

11   10

CARRY-SAVE ADD   82
C   S

12   11

+   84

11

X²(15:0)

Fig 10

Office européen
des brevets

**RAPPORT DE RECHERCHE EUROPEENNE**

Numero de la demande

EP 94 41 0092

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-3 610 906 (W. STAMPLER)<br>* figures 3,4,6 *<br>--- | 1-5 | G06F7/552 |
| X | IBM TECHNICAL DISCLOSURE BULLETIN., vol.34, no.7B, Décembre 1991, NEW YORK US pages 339 - 340, XP000282599 'UNIT TO SQUARE A NUMBER IN REDUCED TIME AND AREA' | 1 | |
| A | * page 340, ligne 7 - ligne 8; figure 2 *<br>--- | 3 | |
| A | EP-A-0 224 963 (T.R.T.)<br>* page 6, ligne 16 - page 8, ligne 2; tableau c *<br>----- | 4,5 | |
| | | | **DOMAINES TECHNIQUES RECHERCHES (Int.Cl.6)**<br><br>G06F |

Le présent rapport a été établi pour toutes les revendications

| Lieu de la recherche | Date d'achèvement de la recherche | Examinateur |
|---|---|---|
| LA HAYE | 9 Décembre 1994 | Verhoof, P |